# EUROPEAN PATENT APPLICATION

(11) **EP 1 313 242 A1**
(43) Date of publication of application: **21.05.2003**
(21) Application number: 01936969.3
(22) Date of filing: 12.06.2001
(51) Int. Cl.: H04J 11/00

(54) **ORTHOGONAL FREQUENCY DIVISION MULTIPLEXED SIGNAL RECEIVING APPARATUS AND ORTHOGONAL FREQUENCY DIVISION MULTIPLEXED SIGNAL RECEIVING METHOD**

(30) Priority: 21.08.2000 JP 2000250145; 23.08.2000 JP 2000252157
(71) Applicant: Kabushiki Kaisha Kenwood, Hachioji-shi, Tokyo 192-8525 (JP)
(72) Inventor: OKUHATA, Yasuhide, Yokohama-shi, Kanagawa 226-0025 (JP); SHINODA, Atsushi, Sagamihara-shi, Kanagawa 229-0029 (JP)
(74) Representative: Patentanwälte Leinweber & Zimmermann
(86) International application number: JP0104954
(87) International publication number: WO02017529

(57) **Abstract**

An OFDM signal apparatus that executes a filtering process of transmission line characteristic data interpolated in a symbol direction in accordance with a signal received from a filter count table according to a signal indicative of a length of a guard interval section so as to prevent an error from occurring in the transmission line characteristic data and to appropriately equalize received signal data. Besides, in order to swiftly switch the receiving channel by use of a simple structure, the OFDM signal apparatus determines, at the timing when an effective symbol section is switched to a guard section, the reception levels of two IF signals generated by down-converting RF signals transmitted via two different channels, and then select the signal transmitted via the channel of the higher level.

## Description

### Technical Field

The present invention relates to an orthogonal frequency division multiplexed signal receiving apparatus that receives an orthogonal frequency division multiplexed signal and recovers transmission data. First, it relates to an orthogonal frequency division multiplexed signal receiving apparatus that appropriately equalizes a received signal to recover transmission data. Secondly, it relates to an orthogonal frequency division multiplexed signal receiving apparatus that is suitable for a network environment in which an identical content is transmitted simultaneously in different frequency bands.

### Background Art

An identicalthod for transmitting a digital signal, the orthogonal frequency division multiplexing (OFDM) method is known.

According to an orthogonal frequency division multiplexing method, a pilot signal having predefined amplitude, phase and timing is inserted into a predetermined subcarrier to transmit data.

For example, in a synchronous modulation system compliant with the DVB-T (Digital Video Broadcasting-Terrestrial) or ISDB-T (Integrated Services Digital Broadcasting-Terrestrial) utilizing the orthogonal frequency division multiplexing method, a pilot signal referred to as a dispersed pilot (SP) is used.

In a receiving apparatus that is applied to such a DVB-T-compliant or ISDB-T-compliant system, receives an orthogonal frequency division multiplexed signal and recovers transmission data by means of an arrangement including an equalizer, a transmission line characteristic for a subcarrier having transmitted the SP signal is first determined based on the received signal data. Then, the receiving apparatus filters data representing the transmission line characteristic in a symbol direction (time direction) and a subcarrier direction (frequency direction) by a symbol filter and a subcarrier filter, respectively. The transmission line characteristic determined only for the subcarrier having transmitted the SP signal is interpolated, thereby providing transmission line data representing transmission line characteristic for all subcarriers.

The receiving apparatus can perform complex division or the like on the received data using the transmission line characteristic data thus obtained, thereby obtaining received signal data equalized according to an effect of the transmission line, and recover the transmission data by demapping or the like.

Here, conventional receiving apparatus execute a filtering process for removing a folding component when interpolating the transmission line characteristic data for the subcarrier having transmitted the SP signal in the subcarrier direction (frequency direction).

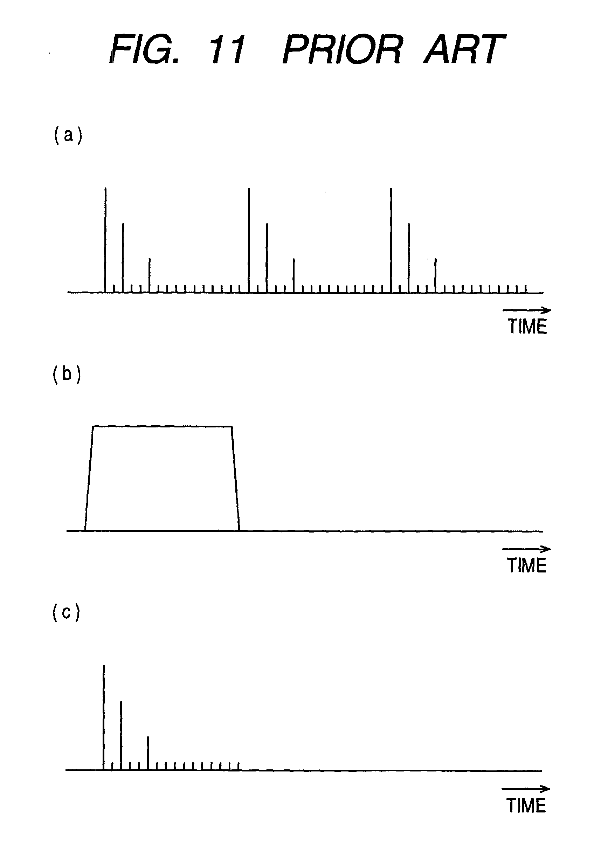

For example, if the transmission line characteristic data for the subcarrier having transmitted the SP signal is interpolated in the symbol direction (time direction), a transmission line characteristic having a time response characteristic (delay profile) shown in Figure 11(a) is obtained. The receiving apparatus filters the transmission line characteristic using a complex BPF (band pass filter) having a pass band characteristic shown in Figure 11(b), thereby interpolating the transmission line characteristic in the subcarrier direction (frequency direction) to generate a transmission line characteristic data having a time response characteristic shown in Figure 11(c).

According to the prior art technique described above, when the transmission characteristic data for the subcarrier having transmitted the SP signal is interpolated in the subcarrier direction (frequency direction), the filtering process may be executed using a complex BPF having the pass band limited enough to remove the folding component.

However, only removing the folding component is not enough to control noise components in the transmission line characteristic, and correct transmission data possibly cannot be recovered.

The present invention has been devised in view of the above-described first problem of the prior art technique. A first object of the invention is to provide an orthogonal frequency division multiplexed signal receiving apparatus that can appropriately equalize a received signal and recover correct transmission data.

On the other hand, systems that enable mobile communication via the orthogonal frequency division multiplexing method include a multi frequency network (MFN) in which a plurality of sending stations transmit an identical content using different frequencies.

A conventional receiving apparatus that receives a signal transmitted from a sending station and recovers transmission data while moving in such an MFN environment switches the receiving channel by controlling the frequency of a local oscillation signal used for down-converting the received signal, when the reception level of the signal transmitted from the sending station. In this way, the receiving apparatus can receive a signal transmitted from another sending station and obtain transmission data having the identical content that is transmitted via a new channel in a different frequency band.

According to the prior art technique described above, the receiving channel is selected by switching the frequency of the local oscillation signal used for down-converting the received signal.

Therefore, there is a problem in that, when the reception level for the channel being used for reception is degraded and switching from the channel to another one provided by another sending station is performed, it takes a long time to obtain the transmission data.

In this regard, the transmission data may be recovered by demodulating a baseband signal based on signals received via two channels. However, this approach disadvantageously results in a complicated structure and high cost.

The present invention has been devised in view of the above-described second problem of the prior art technique. A second object of the invention is to provide an orthogonal frequency division multiplexed signal receiving apparatus that has a simple structure and can obtain transmission data by swiftly switching between different frequency band channels.

### Disclosure of the Invention

In order to attain the above-described first object, an orthogonal frequency division multiplexed signal receiving apparatus according to the invention (first invention) essentially serves to receive an orthogonal frequency division multiplexed (OFDM) signal including a dispersed pilot signal inserted in a predetermined subcarrier and recover transmission data.

According to a first aspect of the first invention, the apparatus according to the invention comprises: section detecting means for detecting the length of a guard interval section of the orthogonal frequency division multiplexed signal; characteristic determining means for determining a transmission line characteristic for the subcarrier that transmits the dispersed pilot signal; first interpolating means for interpolating data indicative of the determined transmission line characteristic in a symbol direction; and second interpolating means for interpolating, in a subcarrier direction, the data interpolated in the symbol direction to determine a transmission line characteristic for all subcarriers. And, the second interpolating means operates in such a manner that it filters the data indicative of the transmission line characteristic which is interpolated in the symbol direction using a filter characteristic corresponding to the detected length of the guard interval section.

More specifically, the apparatus is an orthogonal frequency division multiplexed signal receiving apparatus which receives received signal data indicative of an orthogonal frequency division multiplexed signal consisting of an effective symbol section and a guard interval section and having a dispersed pilot signal inserted in a predetermined subcarrier and recovers transmission data, the apparatus comprising:
section determining means for performing an autocorrelation operation on the input received signal data, thereby determining the length of the guard interval section;
Fourier transform means for performing a Fourier transform on the input received signal data;
characteristic determining means for determining a transmission line characteristic for a subcarrier which transmits the dispersed pilot signal based on the received signal data Fourier-transformed by said Fourier transform means; first interpolating means for interpolating data indicative of the transmission line characteristic determined by said characteristic determining means in a symbol direction; second interpolating means for interpolating, in a subcarrier direction, the data indicative of the transmission line characteristic interpolated in the symbol direction by said first interpolating means to determine a transmission line characteristic for all subcarriers; equalizing operation means for equalizing the received signal data by performing a complex arithmetic operation on the received signal data Fourier-transformed by said Fourier transform means using the data indicative of the transmission line characteristic interpolated by said second interpolating means; and
demapping means for recovering the transmission data from the received signal data equalized by said equalizing operation means.

And, said second interpolating means includes: filter coefficient determining means for determining a filter coefficient corresponding to the length of the guard interval section determined by said section determining means; and
filtering means for performing, using the filter coefficient determined by said filter coefficient determining means, a filtering process for passing only a component, corresponding to the guard interval section beginning at a direct wave, of the transmission line characteristic interpolated in the symbol direction by said first interpolating means and supplying the result to said equalizing operation means.

According to the first aspect of the first invention, when the data indicative of the transmission line characteristic is interpolated in the subcarrier direction, the filter coefficient corresponding to the length of the guard interval section determined by the section determining means is used to perform the filtering process on the data indicative of the transmission line characteristic interpolated in the symbol direction by the first interpolating means.

Thus, the data can be interpolated in the subcarrier direction while preventing an error from occurring in the transmission line characteristic data by passing only a component of the transmission line characteristic which corresponds to the guard interval section beginning at a direct wave, and thus, the received signal data can be appropriately equalized and the correct transmission data can be recovered.

Next, an apparatus according to a second aspect of the first invention comprises: characteristic determining means for determining a transmission line characteristic for the subcarrier that transmits the dispersed pilot signal; first interpolating means for interpolating data indicative of the determined transmission line characteristic in a symbol direction; and second interpolating means for interpolating, in a subcarrier direction, the data interpolated in the symbol direction to determine a transmission line characteristic for all subcarriers.

And, the second interpolating means operates in such a manner that it generates a delay profile from the data indicative of the transmission line characteristic interpolated in the symbol direction and filters the data indicative of the transmission line characteristic interpolated in the symbol direction using a filter characteristic determined based on the delay profile.

More specifically, the apparatus according to the second aspect of the first invention is an orthogonal frequency division multiplexed signal receiving apparatus which receives received signal data indicative of an orthogonal frequency division multiplexed signal having a dispersed pilot signal inserted in a predetermined subcarrier and recovers transmission data, the apparatus comprising: Fourier transform means for performing a Fourier transform on the input received signal data;
characteristic determining means for determining a transmission line characteristic for a subcarrier which transmits the dispersed pilot signal based on the received signal data Fourier-transformed by said Fourier transform means; first interpolating means for interpolating data indicative of the transmission line characteristic determined by said characteristic determining means in a symbol direction; second interpolating means for interpolating, in a subcarrier direction, the data indicative of the transmission line characteristic interpolated in the symbol direction by said first interpolating means to determine a transmission line characteristic for all subcarriers; and equalizing operation means for equalizing the received signal data by performing a complex arithmetic operation on the received signal data Fourier-transformed by said Fourier transform means using the data indicative of the transmission line characteristic interpolated by said second interpolating means.

And, said second interpolating means includes: inverse Fourier transform means for performing an inverse Fourier transform on the data indicative of the transmission line characteristic interpolated in the symbol direction by said first interpolating means, thereby generating a delay profile; multipath detecting means for detecting a direct wave component and at least one delayed wave component from the delay profile generated by said inverse Fourier transform means to determine a delay time of a delayed wave which has the longest path;
filter coefficient determining means for determining a filter coefficient corresponding to the length of the delay time determined by said multipath detecting means; and filtering means for performing, using the filter coefficient determined by said filter coefficient determining means, a filtering process on the data indicative of the transmission line characteristic interpolated in the symbol direction by said first interpolating means and supplying the result to said equalizing operation means.

With the apparatus according to the second aspect of the first invention, when the data indicative of the transmission line characteristic is interpolated in the subcarrier direction, the filter coefficient corresponding to the delay time of the delayed wave component which is the longest multipath determined by the multipath detecting means is used to perform the filtering process on the data indicative of the transmission line characteristic interpolated in the symbol direction by the first interpolating means.

Thus, the data can be interpolated in the subcarrier direction while preventing an error from occurring in the transmission line characteristic data by passing only a component of the transmission line characteristic which corresponds to waves from the direct wave to the delayed wave which is the longest multipath, and thus, the received signal data can be appropriately equalized and the correct transmission data can be recovered.

In order to attain the above-described second object of the invention, an orthogonal frequency division multiplexed signal receiving apparatus according to the invention (second invention) is, essentially, an orthogonal frequency division multiplexed (OFDM) signal receiving apparatus which receives an orthogonal frequency division multiplexed signal consisting of an effective symbol section and a guard interval section and recovers transmission data in a network environment in which an identical content is transmitted in different frequency bands. The OFDM signal receiving apparatus operates in such a manner that any one of an intermediate frequency signal obtained by down-converting a radio frequency signal transmitted via a first channel and an intermediate frequency signal obtained by down-converting a radio frequency signal transmitted via a second channel different from the first channel is selected, a base band signal is demodulated from the selected intermediate frequency signal, a correlation operation is performed on the base band signal to estimate the effective symbol section and the guard interval section, selection of the intermediate frequency signal is switched at a timing estimated to be included in the guard interval section, the reception level of the signal is compared with that of the signal having been selected in the effective symbol section, and the transmission data is recovered from the base band signal demodulated by selecting the intermediate frequency signal having a higher reception level.

According to the second invention, radio frequency signals transmitted via two channels are down-converted into intermediate frequency signals, selection of the intermediate frequency signal is switched at a timing estimated to be included in the guard interval section, the reception level of the signal is compared with that of the signal having been selected in the effective symbol section, and the transmission data is recovered from the base band signal demodulated by selecting the intermediate frequency signal having a higher reception level.

Thus, the receiving channel can be swiftly switched with a simple structure in which the base band signal is demodulated from the intermediate frequency signal resulting from the radio frequency signal transmitted via any one of the two channels.

More specifically, the OFDM signal receiving apparatus according to the second invention comprises: first signal converting means for down-converting a radio frequency signal transmitted via a first channel into an intermediate frequency signal; second signal converting means for down-converting a radio frequency signal transmitted via a second channel different in frequency band from the first channel into an intermediate frequency signal; signal selecting means for selecting any one of the intermediate frequency signal provided by down-conversion by said first signal converting means and the intermediate frequency signal provided by down-conversion by said second signal converting means; demodulating means for demodulating a base band signal from the intermediate frequency signal selected by said signal selecting means; recovering means for recovering the transmission data from the base band signal demodulated by said demodulating means;
section estimating means for receiving the base band signal demodulated by said demodulating means and estimating the effective symbol section and the guard interval section; and selection controlling means that switches said signal selecting means at a timing estimated by said section estimating means to be included in the guard interval section to cause said signal selecting means to select one, which is not selected in the effective symbol section by said signal selecting means, of the intermediate frequency signal provided by down-conversion by said first signal converting means and the intermediate frequency signal provided by down-conversion by said second signal converting means, compares the reception level of the selected signal with that of the signal selected in the effective symbol section by said signal selecting means, and causes said signal selecting means to select the intermediate frequency signal having a higher reception level to enable recoverion of the transmission data.

According to the second invention, the selection controlling means switches selection of the signal by the signal selection means at the timing estimated by the section estimating means to be in the guard interval section, compares the reception level of the selected signal with that of the signal selected in the effective symbol section, and causes the signal selecting means to select the intermediate frequency signal having a higher reception level to enable recoverion of the transmission data.

Thus, the base band signal is demodulated with a single arrangement, so that the whole structure is simplified, and the transmission data can be obtained by switching the reception channel in a short time.

### Brief Description of the Drawings

Figure 1 shows a configuration of an orthogonal frequency division multiplexed signal receiving apparatus according to an embodiment of a first invention;
Figure 2 shows a configuration of an equalizing circuit in Figure 1;
Figure 3 shows a configuration of a subcarrier direction interpolating unit according to a first embodiment;
Figure 4 shows a configuration of an orthogonal frequency division multiplexed signal;
Figure 5 shows a configuration of a subcarrier direction interpolating unit according to a second embodiment;
Figure 6 shows a configuration of an orthogonal frequency division multiplexed signal receiving apparatus according to an embodiment of a second invention;
Figure 7 shows a configuration of a RF signal processing unit in Figure 6;

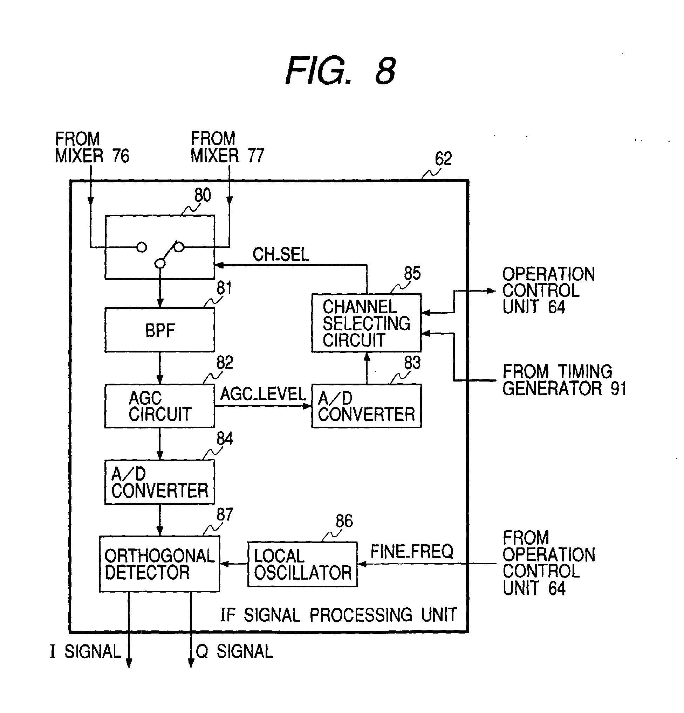

Figure 8 shows a configuration of an IF signal processing unit in Figure 6;
Figure 9 shows a configuration of a baseband signal processing unit in Figure 6;
Figure 10 shows a variety of signals for illustrating an operation of the orthogonal frequency division multiplexed signal receiving apparatus according to the embodiment of the second invention; and
Figure 11 is a diagram for illustrating an operation of a conventional receiving apparatus that filters transmission line characteristic data.

### Best Mode for Carrying out the Invention

Embodiments of a first invention that attains a first object of the present invention and embodiments of a second invention that attains a second object of the present invention will be described in detail below with reference to the drawings.

[First Invention] In the following, first and second embodiments of an orthogonal frequency division multiplexed signal receiving apparatus according to the first invention will be described in detail.

[First Embodiment] For example, an orthogonal frequency division multiplexed signal receiving apparatus 100 according to the first embodiment of the first invention receives a baseband received signal data obtained by detection by means of an orthogonal detector and recovers transmission data from a sending side.

Here, the signal detected by the orthogonal detector is an IF (intermediate frequency) signal received via an antenna, down-converted and then digitized by an ADC (analog/digital converter), for example.

The received signal data to be input to the orthogonal frequency division multiplexed signal receiving apparatus 100 is data obtained by digitizing an orthogonal frequency division multiplexed signal that is subject to orthogonal frequency division multiplexing on the sender side and transmitted via a large number of subcarriers orthogonal to each other in a symbol cycle.

The orthogonal frequency division multiplexed signal consists of an effective symbol section and a guard interval section, and the guard interval section has a copy of some of signals in the effective symbol section.

In addition, in the orthogonal frequency division multiplexed signal, predetermined subcarriers occurring at every 4 symbols in the symbol direction (time direction) and at every 12 subcarriers in the subcarrier direction (frequency direction) have a dispersed pilot (SP) signal having amplitude and phase known to the receiving side inserted therein.

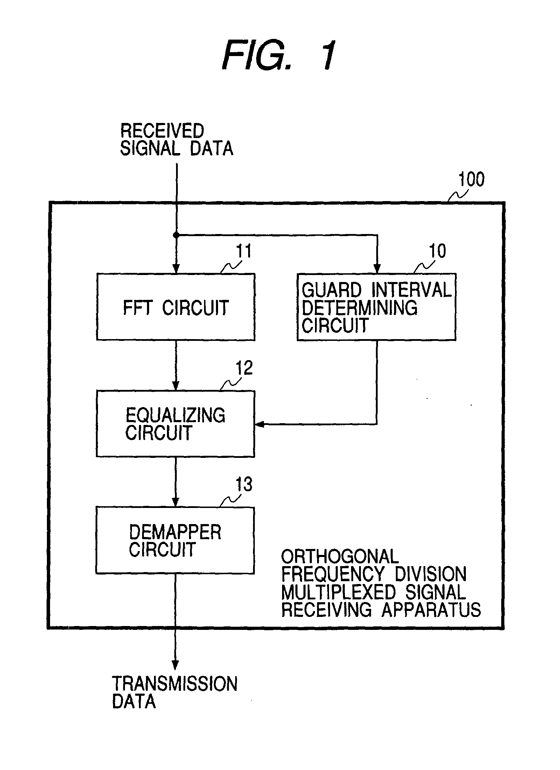

In order to receive such an orthogonal frequency division multiplexed signal and recover the transmission data, the orthogonal frequency division multiplexed signal receiving apparatus 100 comprises a guard interval determining circuit 10, a fast Fourier transform (FFT) circuit 11, an equalizing circuit 12 and a demapper circuit 13, as illustrated in Figure 1.

The guard interval determining circuit 10 determines the length of the guard interval section from a received signal data obtained by detection by means of the orthogonal detector.

For example, the guard interval determining circuit 10 detects a guard interval section and determines the length thereof by performing an autocorrelation operation using the received signal data and data obtained by delaying the received signal data by a time corresponding to the effective symbol section.

The FFT circuit 11 performs Fourier transform on the received signal data obtained by detection by means of the orthogonal detector, thereby converting time series data on the time axis into frequency component data on the frequency axis.

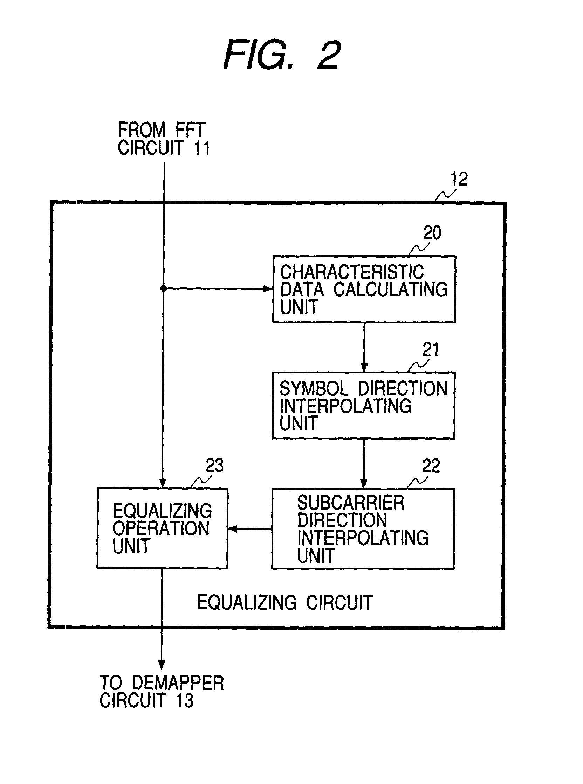

The equalizing circuit 12 performs equalization on the received signal data to compensate the received signal data degraded due to an effect of a transmission line or the like. As shown in Figure 2, the equalizing circuit 12 comprises a characteristic data calculating unit 20, a symbol direction interpolating unit 21, a subcarrier direction interpolating unit 22 and an equalizing operation unit 23.

For example, the characteristic data calculating unit 20 extracts subcarriers having transmitted the SP signal from the received signal data Fourier-transformed by the FFT circuit 11, and performs thereon a complex division by data indicative of a reference SP signal generated at a predetermined timing, thereby generating transmission line determining data indicative of a transmission line characteristic.

In this process, the characteristic data calculating unit 20 generates the transmission line determining data indicative of the transmission line characteristic for the subcarriers having transmitted the SP signal, and sets the transmission line characteristic data for the other subcarriers at zero.

The symbol direction interpolating unit 21 is composed of a finite impulse response (FIR) filter, infinite impulse response (IIR) filter or the like, for example, and interpolates, in the symbol direction (time direction), the transmission line characteristic data for the subcarriers having transmitted the SP signal determined by the characteristic data calculating unit 20.

The subcarrier direction interpolating unit 22 interpolates, in the subcarrier direction, the transmission line characteristic data interpolated in the symbol direction to generate the transmission line characteristic data for all the subcarriers.

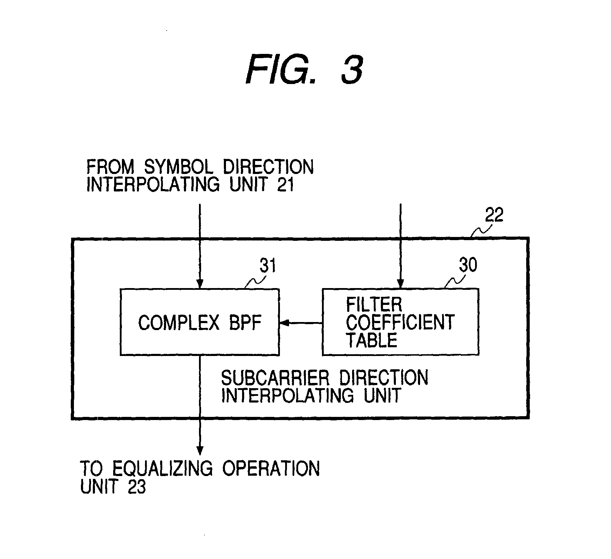

Figure 3 shows a configuration of the subcarrier direction interpolating unit 22.

As shown, the subcarrier direction interpolating unit 22 comprises a filter efficient table 30 and a complex band pass filter (BPF) 31.

The filter efficient table 30 is composed of a read only memory (ROM) or the like, for example. It supplies to the complex BPF 31 a signal indicative of a filter coefficient corresponding to the length of the guard interval section determined by the guard interval determining circuit 10, thereby defining the pass band of the complex BPF 31.

The complex BPF 31 is composed of a FIR filter, IIR filter or the like, for example. It controls the pass band thereof according to the signal indicative of the filter coefficient supplied from the filter coefficient table 30 to perform a filtering process on the transmission line characteristic data received from the symbol direction interpolating unit 21. In this way, the complex BPF 31 interpolates the transmission line characteristic data in the subcarrier direction to determine the transmission line characteristic data for all the subcarrier and supplies this data to the equalizing operation unit 23.

The equalizing operation unit 23 shown in Figure 2 is composed of a numeric operation circuit or the like. For example, it uses the transmission line characteristic data for all the subcarriers determined by the subcarrier direction interpolating unit 22 to perform a complex division on the received signal data received from the FFT circuit 11, thereby equalizing the received signal data.

The demapper circuit 13 shown in Figure 1 is composed of a ROM or the like, for example. It performs a demapping process for recovering the transmission data from the received signal data equalized by the equalizing circuit 12, based on a symbol arrangement on a complex plane.

That is, the demapper circuit 13 recovers the transmission data from an in-phase component and an orthogonal component of the received signal data modulated according to a multi-valued modulation method, such as 64 quadrature amplitude modulation (QAM), based on a correspondence between a prescribed coordinate value on a complex plane and the transmission data.

The demapper circuit 13 outputs the recovered transmission data to a deinterleaving circuit or the like to provide for the processing of the transmission data.

In the following, an operation of the orthogonal frequency division multiplexed signal receiving apparatus 100 according to the first embodiment of the invention will be described.

When the orthogonal frequency division multiplexed signal receiving apparatus 100 recovers transmission data, the FFT circuit 11 first receives received signal data obtained by detection by means of the orthogonal detector, and performs a Fourier transform thereon to convert the time series data into frequency component data.

The FFT circuit 11 transmits the received signal data converted into the frequency component data to the equalizing circuit 12.

At this time, the guard interval determining circuit 10 determines the length of the guard interval section by performing an autocorrelation operation using the received signal data obtained by detection by means of the orthogonal detector.

The guard interval determining circuit 10 transmits a signal indicative of the determined length of the guard interval section to the filter coefficient table 30 provided in the subcarrier direction interpolating unit 22.

Then, the equalizing circuit 12 performs a processing for equalizing the received signal data received from the FFT circuit 11.

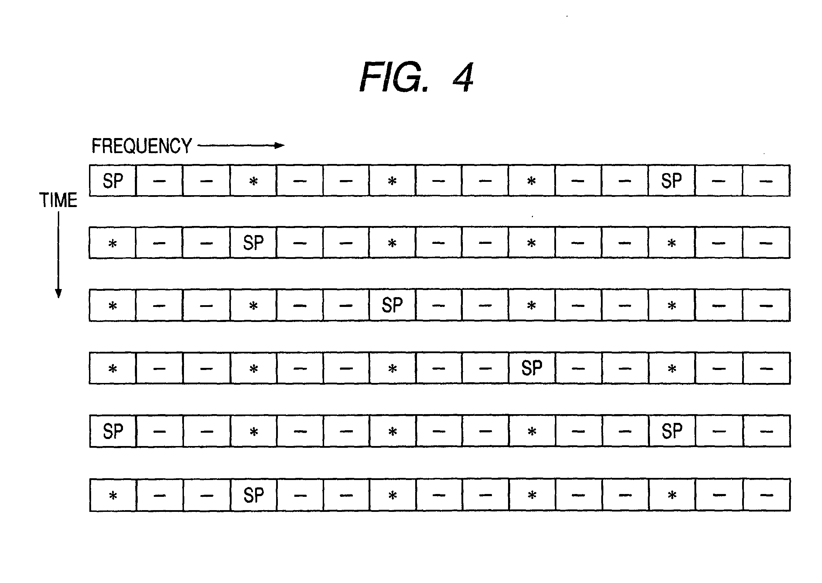

Figure 4 illustrates a configuration of an orthogonal frequency division multiplexed signal indicated by the received signal data input to the equalizing circuit 12.

Subcarriers with an index SP in Figure 4 are those having the SP signal inserted therein on the sending side.

That is, the SP signal is transmitted by being inserted in predetermined subcarriers occurring at every 4 symbols in the symbol direction (time direction) and at every 12 subcarriers in the subcarrier direction (frequency direction).

For example, the characteristic data calculating unit 20 performs a complex division on the subcarriers having transmitted the SP signal (indicated with the index SP in Figure 4) by a reference SP signal generated with amplitude, phase and timing known to the receiving side. Thus, the transmission line characteristic for the subcarriers having transmitted the SP signal is determined.

The characteristic data calculating unit 20 transmits, to the symbol direction interpolating unit 21, the transmission line characteristic data indicative of the transmission line characteristic determined for the subcarriers having transmitted the SP signal.

At this time, the characteristic data calculating unit 20 transmits, to the symbol direction interpolating unit 21, "zero" as the transmission line characteristic data for the subcarriers other than those having transmitted the SP signal.

The symbol direction interpolating unit 21 performs a filtering process for interpolating, in the symbol direction (time direction), the transmission line characteristic data received from the characteristic data calculating unit 20 to determine the transmission line characteristic for the subcarriers with a symbol * in Figure 4.

The symbol direction interpolating unit 21 transmits the transmission line characteristic data interpolated in the symbol direction (time direction) to the subcarrier direction interpolating unit 22.

The subcarrier direction interpolating unit 22 receives the transmission line characteristic data interpolated in the symbol direction (time direction) from the symbol direction interpolating unit 21 and receives a signal indicative of the length of the guard interval section from the guard interval determining circuit 10.

The filter coefficient table 30 outputs a signal indicative of the filter coefficient corresponding to the length of the guard interval section indicated by the signal transmitted from the guar interval determining circuit 10 and provides the same to the complex BPF 31.

Here, the filter coefficient table 30 previously stores the filter coefficient corresponding to the guard interval section with the filter coefficient being set at a value that allows only a component included in the guard interval section beginning at a direct wave in the delay profile indicative of the time response characteristic of the received signal to pass therethrough.

In a typical systemutilizing the orthogonal frequency division multiplexing, a service area is constructed so as to prevent a multipath that causes a delay beyond the guard interval section from occurring. Therefore, since the filter coefficient table 30 defines the pass band of the complex BPF 31 and allows only the data in a region corresponding to the guard interval section of the direct wave to pass therethrough, an error can be prevented from occurring in the transmission line characteristic data.

The complex BPF31 controls the pass band thereof according to the signal received from the filter coefficient table 30 and performs a filtering process on the transmission line characteristic data received from the symbol direction interpolating unit 21.

In this way, the complex BPF 31 can control the pass band thereof so as to pass therethrough the components of the transmission line characteristic ranging from the component corresponding to the direct wave to the component corresponding to the delayed wave delayed from the direct wave by the guard interval section, and interpolates the transmission line characteristic data in the subcarrier direction (frequency direction).

The complex BPF 31 transmits, to the equalizing operation unit 23, the transmission line characteristic data determined for all the subcarriers by the interpolation in the subcarrier direction.

The equalizing operation unit 23 equalizes the received signal data received from the FFT circuit 11 by performing a complex arithmetic operation, such as a complex division, on the received signal data using the transmission line characteristic data received from the complex BPF 31.

The equalizing operation unit 23 transmits the equalized received signal data to the demapper circuit 13.

The demapper circuit 13 uses the received signal data equalized by the equalizing operation unit 23 to recover the transmission data and outputs the same data to a circuit that processes the transmission data, such as a deinterleaving circuit.

As described above, the subcarrier direction interpolating unit 22 has the filter coefficient table 30, and interpolates the transmission line characteristic data in the subcarrier direction (frequency direction) by controlling the pass band by the filter coefficient corresponding to the length of the guard interval section determined by the guard interval determining circuit 10.

In this way, the component of the direct wave beyond the guard interval section can be suppressed, an error can be prevented from occurring in the transmission line characteristic data and the correct transmission data can be recovered.

[Second Embodiment] The orthogonal frequency division multiplexed signal receiving apparatus 100 according to the first embodiment of the first invention described above filters the transmission line characteristic data to suppress the component of the direct wave beyond the guard interval section. However, the component beyond the delayed wave which is the longest path when a multipath occurs may be suppressed. In the following, an orthogonal frequency division multiplexed signal receiving apparatus according to a second embodiment of the first invention, which filters the transmission line characteristic data to suppress the component beyond the delayed wave which is the longest path in a multipath situation will be described.

The orthogonal frequency division multiplexed signal receiving apparatus according to the second embodiment of the this (first) invention differs from the orthogonal frequency division multiplexed signal receiving apparatus 100 according to the first embodiment of the first invention described above in the configuration of the subcarrier direction interpolating unit 22.

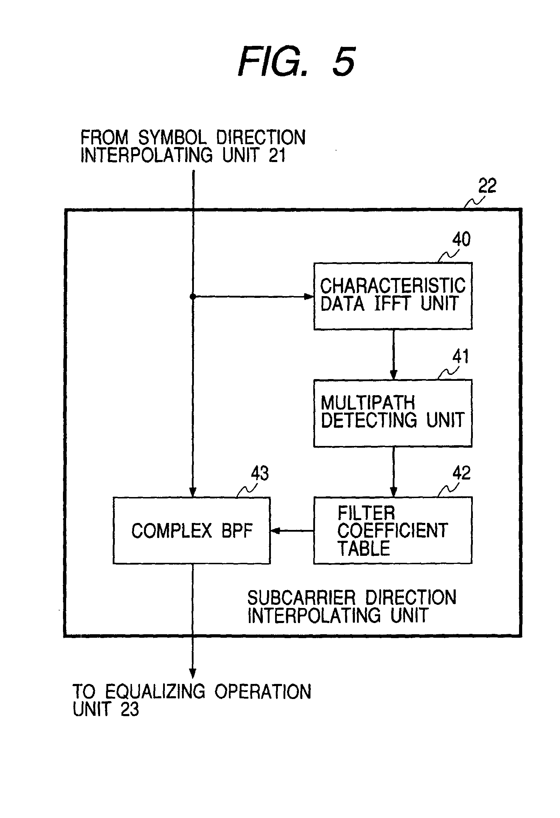

Specifically, the orthogonal frequency division multiplexed signal receiving apparatus 100 according to the second embodiment of this invention comprises the subcarrier direction interpolating unit 22 configured as shown in Figure 5.

As shown in Figure 5, the subcarrier direction interpolating unit 22 comprises a characteristic data IFFT unit 40, a multipath detecting unit 41, a filter coefficient table 42 and a complex BPF 43.

The characteristic data IFFT unit 40 performs an inverse Fourier transform on the transmission line characteristic data interpolated in the symbol direction (time direction) by the symbol direction interpolating unit 21, thereby producing a delay profile.

The multipath detecting unit 41 determines, from the delay profile produced by the inverse Fourier transform by the characteristic data IFFT unit 40, a direct wave component and a delayed wave component at the time when a multipath occurs.

The multipath detecting unit 41 transmits, to the filter coefficient table 42, a signal indicative of the delay time of a component in the determined delayed wave components which constitutes the longest path.

The filter coefficient table 42 supplies, to the complex BPF 43, a signal indicative of the filter coefficient corresponding to the delay time of the delayed wave component which is the longest path in the multipath situation, which is determined by the multipath detecting unit 41 to define the pass band of the complex BPF 43.

The complex BPF 43 controls the pass band thereof according to the signal indicative of the filter coefficient supplied from the filter coefficient table 42 to perform a filtering process on the transmission line characteristic data received from the symbol direction interpolating unit 21.

In the orthogonal frequency division multiplexed signal receiving apparatus 100 according to the second embodiment of this invention including the subcarrier direction interpolating unit 22 thus configured, the FFT circuit 11, the characteristic data calculating unit 20 and the symbol direction interpolating unit 21 operate in the same way as in the first embodiment described above to generate the transmission line characteristic data interpolated in the symbol direction (time direction).

When the subcarrier direction interpolating unit 22 receives the transmission line characteristic data interpolated in the symbol direction (time direction) by the symbol direction interpolating unit 21, the characteristic data IFFT unit 40 therein performs an inverse Fourier transform to produce a delay profile.

The characteristic data IFFT unit 40 transmits the produced delay profile to the multipath detecting unit 41.

The multipath detecting unit 41 receives the delay profile from the characteristic data IFFT unit 40, compares each signal component in the delay profile with a prescribed threshold, and detects a component having a value larger than the threshold as the direct wave component and the delayed wave component due to multipath.

The multipath detecting unit 41 determines a component which constitutes the longest path (a component having the maximum delay time) from the detected delayed wave components, and transmits a signal indicative of the delay time of the component to the filter coefficient table 42.

The filter coefficient table 42 outputs a signal indicative of the filter coefficient corresponding to the delay time indicated by the signal transmitted from the multipath detecting unit 41 and supplies the same signal to the complex BPF 43.

Here, the filter coefficient table 42 previously stores the filter coefficient corresponding to the length of the delay time with the filter coefficient being set at a value that allows the components of the transmission line characteristic ranging from the component corresponding to the direct wave to the component corresponding to the delayed wave having the longest path to pass therethrough.

In this way, the filter coefficient table 42 defines the pass band of the complex BPF 43, so that the time width in which themultiple paths are distributed is apass bandwidth, whereby an error can be prevented from occurring in the transmission line characteristic data.

As described above, according to the first invention, when the transmission line characteristic data is filtered to interpolate the transmission line characteristic data in the subcarrier direction (frequency direction), the pass band is controlled in response to the length of the guard interval section or the delay time of the delayed wave which is the longest path, and therefore, an error can be prevented from occurring in the transmission line characteristic data.

Thus, the received signal data can be appropriately equalized with an effect of a noise on the transmission line characteristic data being removed, and the correct transmission data can be recovered.

[Second Invention] In the following, an embodiment of an orthogonal frequency division multiplexed signal receiving apparatus according to a second invention will be described in detail.

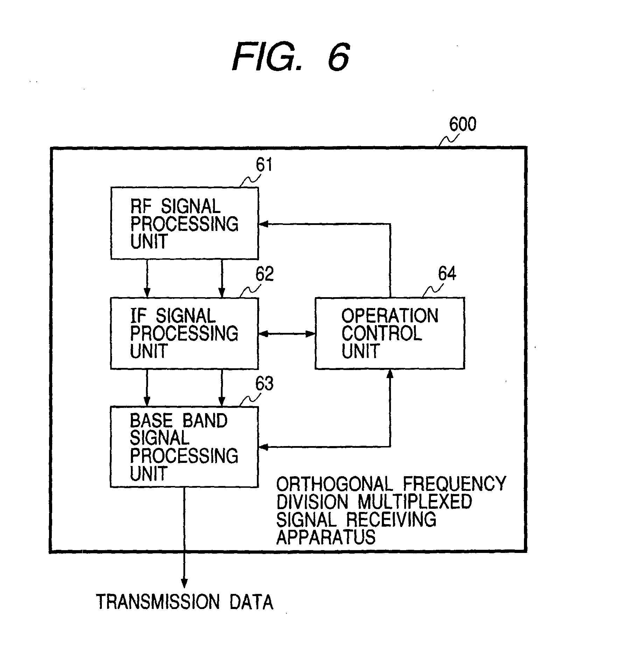

Figure 6 shows a configuration of an orthogonal frequency division multiplexed signal receiving apparatus 600 according to the embodiment of the second invention.

As shown, the orthogonal frequency division multiplexed signal receiving apparatus 600 comprises a radio frequency (RF) signal processing unit 61, an intermediate frequency (IF) signal processing unit 62, a base band signal processing unit 63 and an operation control unit 64.

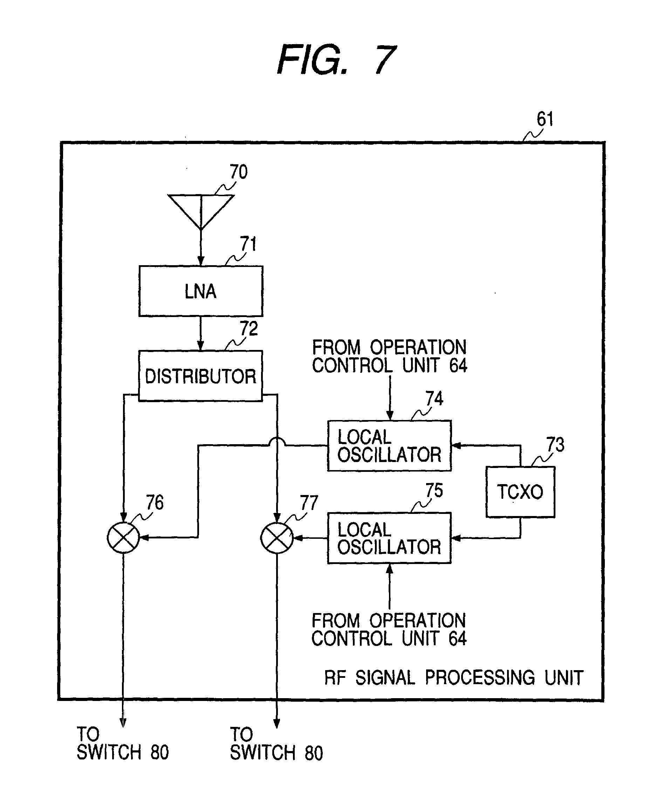

As shown in Figure 7, the RF signal processing unit 61 comprises an antenna 70, a low noise amplifier (LNA) 71, a distributor 72, a temperature compensation crystal oscillator (TCXO) 73, first and second local oscillators 74, 75, and first and second mixers 76, 77.

The antenna 70 receives an RF signal that is subject to an orthogonal frequency division multiplexing on a sending station and wirelessly transmitted therefrom, and transmits the received RF signal to the LNA 71.

Here, in the orthogonal frequency division multiplexed RF signal received by the antenna 70, one symbol section is separated into an effective symbol section and a guard interval section. The guard interval section precedes the effective symbol section in a symbol section, and is a redundant signal section having a copy of a rear part of the effective symbol section.

The LNA 71 amplifies the RF signal received via the antenna 70 and transmits the amplified RF signal to the distributor 72.

The distributor 72 distributes the RF signal received from the LNA 71 among the first mixer 76 and the second mixer 77.

The TCXO 73 is an oscillator that generates a reference frequency signal used by the first and second local oscillators 74, 75 when they generate their respective local oscillation signals.

The first local oscillator 74 is composed of a phase locked loop (PLL) circuit, for example. It generates a local oscillation signal having a first frequency by, for example, dividing the reference frequency signal generated by the TCXO 73 under the control of the operation control unit 64. That is, the first local oscillator 74 generates the local oscillation signal having the first frequency which is in phase with the reference frequency signal generated by the TCXO 73, and supplies the same signal to the first mixer 76.

The second local oscillator 75 is composed of a PLL circuit, for example. It generates a local oscillation signal having a second frequency different from the first frequency by, for example, dividing the reference frequency signal generated by the TCXO 73 under the control of the operation control unit 64. The second local oscillator 75 generates the local oscillation signal having the second frequency which is in phase with the reference frequency signal generated by the TCXO 73, and supplies the same signal to the second mixer 77.

The first mixer 76 down-converts the RF signal into the IF signal by multiplying the RF signal provided by the distributor 72 by the local oscillation signal having the first frequency received from the first local oscillator 74. The first mixer 76 transmits the IF signal obtained by the down-converting of the RF signal to a switch 80 provided in the IF signal processing unit 62.

The second mixer 77 down-converts the RF signal into the IF signal by multiplying the RF signal provided by the distributor 72 by the local oscillation signal having the second frequency received from the second local oscillator 75. The second mixer 77 transmits the IF signal obtained by down-conversion of the RF signal to the switch 80 provided in the IF signal processing unit 62.

The IF signal processing unit 62 shown in Figure 6 has the configuration shown in Figure 3, for example. It comprises the switch 80, a band pass filter (BPF) 81, an automatic gain control (AGC) circuit 82, first and second analog/digital (A/D) converters 83, 84, a channel selecting circuit 85, a third local oscillator 86 and an orthogonal detector 87.

The switch 80 selects any one of the IF signals received from the first and second mixers 76, 77 provided in the RF signal processing unit 61 and supplies the selected one to the BPF 81. That is, the switch 80 selects, according to a signal CH_SEL transmitted from the channel selecting circuit 85, any one of the IF signal provided by down-conversion by the first mixer 76 and the IF signal provided by down-conversion by the second mixer 77 and supplies the selected one to the BPF 81. In other words, changing the IF signal selected by the switch 80 provides switching between receiving channels of the orthogonal frequency division multiplexed signal receiving apparatus 600.

The BPF 81 limits the pass band for the IF signal supplied from the switch 80 to remove a component outside of the pass band of the receiving channel and transmits the resulting signal to the AGC circuit 82.

The AGC circuit 82 automatically control a signal amplification factor to amplify the IF signal having passed through the BPF 81 to a predetermined signal level.

Here, the AGC circuit 82 determines the reception level of the IF signal received from the BPF 81, that is , the reception level of the RF signal based on the signal amplification factor used in amplification of the IF signal, for example. The AGC circuit 82 transmits a signal AGC_LEVEL indicative of the determined reception level to the first A/D converter 83.

Besides, the AGC circuit 83 transmits the amplified IF signal to the second A/D converter 84.

The first A/D converter 83 digitizes the signal AGC_LEVEL received from the AGC circuit 82 and supplies the resulting signal to the channel selecting circuit 85.

The second A/D converter 84 digitizes the amplified IF signal from the AGC circuit 82 and supplies the resulting signal to the orthogonal detector 87.

The channel selecting circuit 85 is intended for controlling selection among from receiving channels by switching of the switch 80. That is, the channel selecting circuit 85 generates a signal CH_SEL for selecting a receiving channel and supplies the signal to the switch 80, thereby controlling selection between the IF signals. At this time, the channel selecting circuit 85 determines the timing of switching the selection by the switch 80 according to a signal G_TIMING received from a timing generator 91 provided in the base band signal processing unit 63. The channel selecting circuit 85 notifies the operation control unit 64 of the receiving channel selected by the switch 80.

Besides, the channel selecting circuit 85 receives the signal AGC_LEVEL digitized by the first A/D converter 83 and determines the reception level.

The third local oscillator 86 generates a local oscillation signal having a frequency according to a signal FINE_FREQ received from the operation control unit 64 and supplies the local oscillation signal to the orthogonal detector 87. The third local oscillator 86 can remove an offset frequency in the IF signal by generating the local oscillation signal having a frequency according to the signal FINE_FREQ and supplying the local oscillation signal to the orthogonal detector 87.

The orthogonal detector 87 uses the local oscillation signal received from the third local oscillator 86 to perform orthogonal detection of the IF signal received from the second A/D converter 84, thereby demodulating the base band signal. The orthogonal detector 87 transmits, to the base band signal processing unit 63, an in-phase (I) signal indicative of an in-phase component of the demodulated base band signal and a quadrature (Q) signal indicative of an orthogonal component thereof.

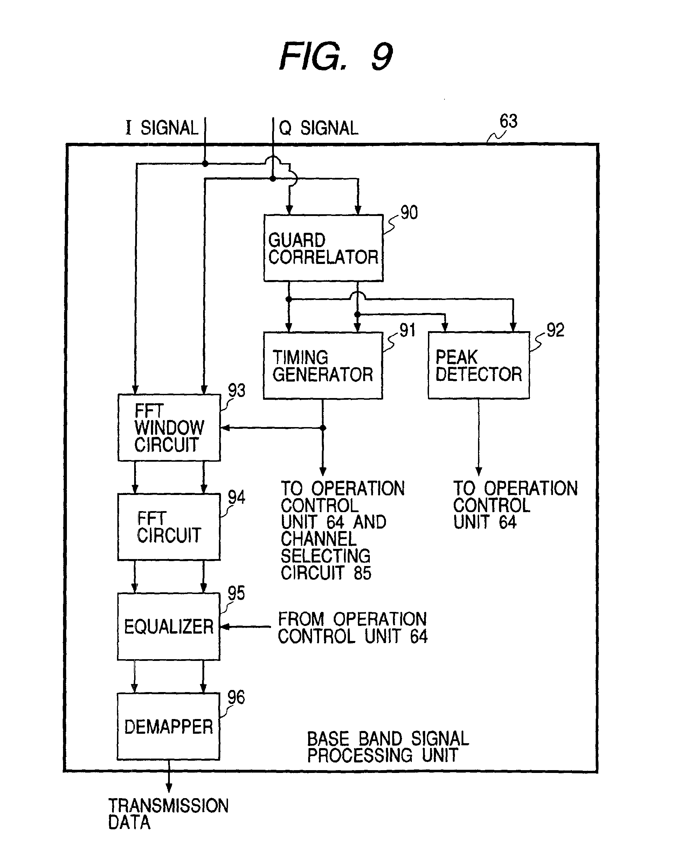

The base band signal processing unit 63 shown in Figure 6 has the configuration shown in Figure 9, for example. It comprises a guard correlator 90, a timing generator 91, a peak detector 92, a fast Fourier transform (FFT) window circuit 93, an FFT circuit 94, an equalizer 95 and a demapper 96.

The guard correlator 90 is intended for performing an autocorrelation operation on the base band signal. That is, the guard correlator 90 delays the base band signal consisting of the I signal and the Q signal by a length of the effective symbol section and determines the autocorrelation between the delayed base band signal and the base band signal not delayed in a time width corresponding to the length of the guard interval section. The guard correlator 90 transmits the correlation value obtained by performing autocorrelation to the timing generator 91 and the peak detector 92.

Here, since the guard interval section is a signal section having a copy of a rear part of the effective symbol section, the correlation value obtained by the guard correlator 90 performing the autocorrelation operation has a peak at a timing when the trailing end of the effective symbol section is received.

The timing generator 91 is intended for estimating the effective symbol section and the guard interval section based on the result of the autocorrelation operation performed by the guard correlator 90. That is, the timing generator 91 determines the timing when switching between the effective symbol section and the guard interval section occurs, and generates a signal G_TIMING indicative of the determined timing. The timing generator 91 transmits the signal G_TIMING to the FFT window circuit 93, the channel selecting circuit 85 provided in the IF signal processing unit 62 and the operation control unit 64.

The peak detector 92 is intended for detecting a peak value of the correlation value obtained by the guard correlator 90 performing the autocorrelation operation and a signal phase at a timing when the correlation value has a peak. The peak detector 92 notifies the operation control unit 64 of the detected peak value and signal phase.

The FFT window circuit 93 is intended for extracting only the base band signal in the effective symbol section and inputting the signal to the FFT circuit 94. It removes the base band signal in the guard interval section, which is determined based on the signal G_TIMING received from the timing generator 91, and then transmits the base band signal in the effective symbol section to the FFT circuit 94.

The FFT circuit 94 is intended for performing a fast Fourier transform on the base band signal in the effective symbol section received from the FFT window circuit 93 to convert the signal on the time axis into the signal on the frequency axis. The FFT circuit 94 transmits the fast-Fourier-transformed base band signal to the equalizer 95.

The equalizer 95 is composed of a finite impulse response (FIR) filter, infinite impulse response (IIR) filter or the like, for example. It is intended for compensating the amplitude or phase of the base band signal received from the FFT circuit 94 according to the characteristic of the transmission line to remove a signal distortion or the like. The equalizer 95 transmits the equalized base band signal to the demapper 96.

The demapper 96 is composed of a read only memory (ROM) or the like, for example. It performs a demapping process for recovering the transmission data from the base band signal equalized by the equalizer 95, based on a symbol arrangement on a complex plane.

That is, the demapper 96 recovers the transmission data from the I signal and Q-signal of the base band signal modulated according to a multi-valued modulation method, such as 64 quadrature amplitude modulation (QAM), based on a correspondence between a coordinate value determined on a complex plane and the transmission data.

The demapper 96 outputs the recovered transmission data to a deinterleaving circuit or the like to provide for the processing of the transmission data.

The operation control unit 64 shown in Figure 1 is composed of a microprocessor or the like, for example. It is to control the entire operation of the orthogonal frequency division multiplexed signal receiving apparatus 600.

For example, the operation control unit 64 determines, based on the notification received from the peak detector 92, the signal phase at the timing when the peak of the correlation value obtained by the guard correlator 90 performing the autocorrelation operation on the base band signal appears. The operation control unit 64 transmits the signal FINE_FREQ to the third local oscillator 86 to control the operation thereof, thereby causing it to generate a local oscillation signal having a frequency corresponding to the determined signal phase. That is, the operation control unit 64 estimates the offset frequency which would be included in the IF signal supplied to the orthogonal detector 87 based on the signal phase, of which the peak detector 92 notifies the operation control unit, and causes the third local oscillator 86 to generate the local oscillation signal for removing the estimated offset frequency.

In the following, an operation of the orthogonal frequency division multiplexed signal receiving apparatus 600 according to an embodiment of this invention will be described.

The orthogonal frequency division multiplexed signal receiving apparatus 600 is applied to amulti frequency network (MFN) environment, in which a plurality of sending stations transmits an identical content via different frequency bands. The apparatus receives a RF signal transmitted from a sending station via the antenna 70.

The distributor 72 distributes the RF signal received via the antenna70 and then amplified by the LNA 71 among the first mixer 76 and the second mixer 77.

The first and second local oscillators 74, 75 generate local oscillation signals having first and second frequencies, respectively, by, for example, dividing the reference frequency signal supplied from the TCXO 73 in a ratio determined under control of the operation control unit 64, and supply the local oscillation signals to the first and second mixers 76, 77, respectively.

Here, the operation control unit 64 controls the first and second local oscillators 74, 75 to cause them to generate local oscillation signals, which are used by the first and second mixers 76, 77 to down-convert RF signals in different frequency bands into IF signals in predetermined intermediate frequency bands. In this way, the operation control unit 64 causes the RF signal processing unit 61 to generate IF signals which enable reception of two pieces of transmission data having the same content and transmitted via two channels in different frequency bands.

Each of the first and second mixers 76, 77 transmits the IF signal obtained by down-conversion of the RF signal to the switch 80.

The switch 80 selects any one of the IF signal received from the first mixer 76 and the IF signal received from the second mixer 77 according to the signal CH_SEL transmitted from the channel selecting circuit 85 and transmits the selected one to the AGC circuit 82 via the BPF 81.

The IF signal having passed through the BPF 81 is amplified by the AGC circuit 82, digitized by the second A/D converter 84 and then supplied to the orthogonal detector 87.

At this time, the AGC circuit 82 determines the reception level of the RF signal which has been converted into the IF signal selected by the switch 80 based on the signal amplification factor used to amplify the IF signal to a predetermined signal level, and notifies the channel selecting circuit 85 of the reception level in the form of the signal AGC_LEVEL. For example, the AGC circuit 82 generates the signal AGC_LEVEL having a voltage waveform with the voltage value varying in response to the reception level, and the signalAGC_LEVEL is digitized by the first A/D converter 83 and then transmitted to the channel selecting circuit 85.

The orthogonal detector 87 uses the local oscillation signal received from the third local oscillator 86 to perform orthogonal detection of the IF signal supplied from the AGC circuit 82 via the second A/D converter 84, thereby demodulating the I signal and Q signal of the base band signal. The I signal and Q signal demodulated by the orthogonal detector 87 are transmitted to the base band signal processing unit 63.

The FFT window circuit 93 removes a part corresponding to the guard interval section from the base band signal consisting of the I signal and Q signal demodulated by the orthogonal detector 97, and supplies only apart corresponding to the effective symbol section to the FFT circuit 94.

The FFT circuit 94 performs a fast Fourier transform on the base band signal and transmits the resulting signal to the equalizer 95 as a signal indicative of the frequency component.

The equalizer 95 receives the base band signal from the FFT circuit 94 and estimates the characteristic of the transmission line by, for example, extracting a subcarrier having transmitted a pilot signal. The equalizer 95 equalizes the base band signal by, for example, compensating the base band signal according to the estimated transmission line characteristic, and supplies the resulting signal to the demapper 96.

The demapper 96 performs a demapping process using the base band signal equalized by the equalizer 95 to recover the transmission data from the sending station.

The guard correlator 90 performs an autocorrelation operation on the base band signal by delaying the base band signal consisting of the I signal and the Q signal demodulated by the orthogonal detector 87 by a time corresponding to the effective symbol section and performing a product-sum operation for the delayed base band signal and the base band signal not delayed.

The timing generator 91 estimates the effective symbol section and the guard interval section based on the correlation value obtained by the guard correlator 90 performing the autocorrelation operation and determines the timing when switching between these sections occurs. The timing generator 91 generates a signal G_TIMING having a rectangular voltage waveform with the voltage value varying between the effective symbol section and the guard interval section, for example, and transmits the signal to the FFT window circuit 93, the channel selecting circuit 85 and the operation control unit 64.

The peak detector 92 determines the timing when the correlation value obtained by the guard correlator 90 performing the autocorrelation has a peak, detects the correlation value and signal phase at the timing and notifies the operation control unit 64 of the correlation value and the signal phase.

The operation control unit 64 cooperates with the channel selecting circuit 85 or the like to swiftly switch the receiving channel to enable the transmission data having an identical content to be recovered.

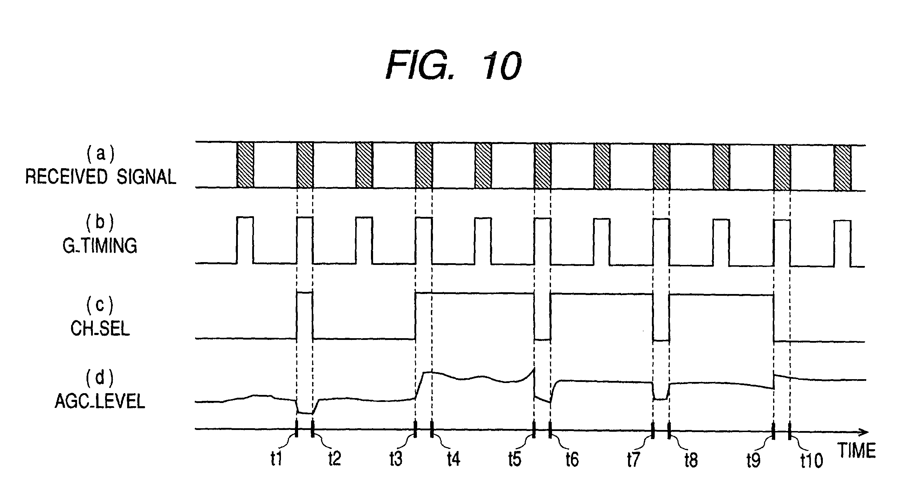

For example, Figure 10(a) shows a configuration of a signal received by the orthogonal frequency division multiplexed signal receiving apparatus 600. In Figure 10(a), the guard interval sections of the received signal are hatched.

The timing generator 91 generates the signal G_TIMING shown in Figure 10(b) to enable discrimination between the effective symbol section and the guard interval section.

The FFT window circuit 93 determines the effective symbol section based on the signal G_TIMING, removes the base band signal in the guard interval section and supplies the remaining signal to the FFT circuit 94.

The operation control unit 64 controls the first local oscillator 74 to cause it to generate a local oscillation signal having a first frequency f1 for receiving a signal transmitted from a sending station via a first channel CH1, for example. In addition, the operation control unit 64 controls the second local oscillator 75 to cause it to generate a local oscillation signal having a second frequency f2 for receiving a signal transmitted from the sending station via a second channel CH2 different in frequency band from the first channel CH1.

Besides, the signal CH_SEL shown in Figure 10(c) instructs selection of the first channel CH1 when it is at a low level and instructs selection of the second channel CH2 when it is at a high level.

Specifically, the signal CH_SEL shown in Figure 10(c) instructs selection of the first channel CH1 in a period up to a timing t1, and the switch 80 selects, according to the signal CH_SEL, the IF signal provided by down-conversion by the first mixer 76 and supplies the IF signal to the BPF 81.

Then, the channel selecting circuit 85 determines that switching of selection of the receiving channel is needed when it is detected that the signal level (voltage value, for example) of the signal AGC_LEVEL received from the AGC circuit 82 via the first A/D converter 83, for example, is lower than a predetermined threshold prescribed by the operation control unit 64.

When it is determined that switching of selection of the receiving channel is needed, the channel selecting circuit 85 controls the switch 80 selecting the IF signal and performs a processing for switching the receiving channel.

That is, the channel selecting circuit 85 receives the signal G_TIMING from the timing generator 71, and determines the timing when the received signal enters the guard interval section.

For example, when the signal G_TIMING shown in Figure 10(b) becomes at a signal level (voltage value) indicating the guard interval section at the timing t1, the channel selecting circuit 85 switches the signal level of the signal CH_SEL as shown in Figure 10(c) to cause the switch 80 to select the IF signal provided by down-conversion by the second mixer 77.

Here, if the receiving channel is switched every time when the received signal enters the guard interval section, the property of the timing generator 91 is degraded and it becomes difficult to discriminate between the effective symbol section and the guard interval section. Therefore, the channel selecting circuit 85 is adapted to switch the signal level of the signal CH_SEL once for a predetermined number of guard interval sections, such as once for two guard interval sections as shown in Figure 10 (c).

The switch 80 switches selection of the IF signal according to the signal CH_SEL received from the channel selecting circuit 85, thereby switching the signal supplied to the BPF 81 from the signal received via the first channel CH1 to the signal received via the second channel CH2.

That is, the switch 80 selects the IF signal provided by down-conversion by the second mixer 77 instead of the IF signal provided by the down-conversion by the first mixer 76 according to the signal CH_SEL and supplies the selected IF signal to the BPF 81.

At this time, as shown in Figure 10(d), for example, if the signal AGC_LEVEL generated by the AGC circuit 82 is lowered, the channel selecting circuit 85 determines that the first channel CH1 is higher than the second channel CH2 in reception level.

Then, the channel selecting circuit 85 switches the signal level of the signal CH_SEL at a timing t2 when the guard interval section ends, the timing being determined from the signal. G_TIMING, and changes the receiving channel to the first channel CH1.

In addition, the channel selecting circuit 85 notifies the operation control unit 64 of the reception level of the second channel CH2 received in the guard interval section. The operation control unit 64 determines whether or not the reception level of which is notified by the channel selecting circuit 85 is higher than a predetermined reference level.

If the operation control unit 64 determines that the reception level of the second channel CH2 is higher than the reference level, it determines that the signal received via the second channel CH2 can be demodulated and then determines whether or not the first channel CH1 and the second channel CH2 transmit an identical content.

At this time, the guard correlator 90 performs a correlation operation for the guard interval section of the signal received via the second channel CH2 during the period between the timings t1 and t2 and a rear part of the effective symbol section of the signal received via the first channel CH1 during the period between the timings t2 and t3.

The operation control unit 64 reads a peak of the correlation value detected by the peak detector 92 from the correlation value obtained by the correlation operation performed by the guard correlator 90 and compares the peak value with a predetermined reference.

If the operation control unit 64 determines that the peak correlation value is equal to or higher than the predetermined reference value, it determines that the first channel CH1 and the second channel CH2 transmit the same content. At this time, the operation control unit 64 can estimate, based on the signal phase of which is notified by the peak detector 92, the difference between the offset frequency of the IF signal provided by down-conversion by the first mixer 76 and the offset frequency of the IF signal provided by down-conversion by the second mixer 77.

On the other hand, if the operation control unit 64 determines that the read guard correlation output is lower than the predetermined reference value, it determines that the first channel CH1 and the second channel CH2 transmit different contents and controls the channel selecting circuit 85 not to select the second channel CH2 afterward.

That is, if the second channel CH2 transmits a content different from that for the first channel CH1, the switch 80 selects only the IF signal provided by down-conversion by the first mixer 76, which has been selected in the effective symbol section, and supplies the IF signal to the BPF 81.

If the first channel CH1 and the second channel CH2 transmit the same content, when the signal G_TIMING becomes at a signal level indicating the guard interval section at the timing t3, the channel selecting circuit 85 switches the signal CH_SEL to cause the switch 80 to select the IF signal provided by down-conversion by the second mixer 77.

At this time, the channel selecting circuit 85 determines that the second channel CH2 is higher than the first channel CH1 in reception level because the signal level of the signal AGC_LEVEL transmitted from the AGC circuit 82 increases, as shown in Figure 10(d).

Thus, the channel selecting circuit 85 maintains the signal level of the signal CH_SEL even after a timing t4, at which the guard interval section ends, is reached, and adopts the second channel CH2 as the receiving channel for the effective symbol section which begins at the timing t4.

The channel selecting circuit 85 notifies the operation control unit 64 that the second channel CH2 is adopted as the receiving channel.

When the operation control unit 64 is notified by the channel selecting circuit 85 that the second channels CH2 is adopted as the receiving channel, it transmits, to the third local oscillator 86, the signal FINE_FREQ responding to the signal phase of which is notified by the peak detector 92, thereby switching the frequency of the local oscillation signal to be supplied to the orthogonal detector 87. Thus, the third local oscillator 86 can generate a local oscillation signal for removing the offset frequency of the IF signal provided by down-conversion by the second mixer 77.

In addition, at this time, the operation control unit 64 resets the equalizer 95. Thus, the base band signal can be equalized in accordance with the characteristic of the transmission line for reception via the second channel CH2 different from the first channel CH1 in frequency band.

Then, selection by the switch 80 is switched to determine the reception level for the first channel CH1 at timings t5 and t7. Since the reception level for the second channel CH2 is higher than that for the first channel CH1 at both the timings, the receiving channel is changed back to the second channel CH2 to recover the transmission data at timings t6 and t8.

After that, if selection by the switch 80 is switched at a timing t9, the channel selecting circuit 85 maintains the signal level of the signal CH_SEL even after a timing t10, at which the guard interval section ends, is reached since the reception level for the first channel CH1 is higher than that for the second channel CH2. Thus, the transmission data can be recovered with the first channel CH1 being used as the receiving channel for the effective symbol section which begins at the timing t10.

As described above, according to the second invention, the first and second local oscillators 74, 75 and the first and second mixers 76, 77 are provided, and the RF signals in different two radio frequency bands can be down-converted to generate the IF signals in intermediate frequency bands. The switch 80 switches selection of the IF signal for demodulating the base band signal in the guard interval section, compares the reception level of the selected IF signal with that of the IF signal selected in the effective symbol section, and selects the IF signal having higher reception level to recover the transmission data.

Thus, transmission data can be obtained with a simple structure by swiftly switching between channels for different frequency bands.

Here, in the embodiment of the above-described second invention, description has been made assuming that the channel selecting circuit 85 supplies the signal CH_SEL to the switch 80 to switch the receiving channel. However, the operation control unit 64 may have the function of the channel selecting circuit 85 according to the above-described embodiment and control selection by the switch 80.

### Industrial Applicability

According to the first invention, when the transmission line characteristic data is interpolated in the subcarrier direction (frequency direction), the pass band is controlled in response to the length of the guard interval section or the delay time of the delayed wave which is the longest path to filter the transmission line characteristic data, whereby an error can be prevented from occurring in the transmission line characteristic data.

Thus, the received signal data can be appropriately equalized, and the correct transmission data can be recovered.

Furthermore, according to the second invention, selection of the IF signal is switched in the guard interval section, comparison between the reception levels of the IF signals is performed, and the IF signal having higher reception level can be selected to recover the transmission data.

Thus, transmission data can be obtained with a simple structure by swiftly switching between channels for different frequency bands. frequency band.

## Claims

1. An orthogonal frequency division multiplexed signal receiving apparatus which receives an orthogonal frequency division multiplexed signal including a dispersed pilot signal inserted in a predetermined subcarrier and recovers transmission data, said apparatus comprising:
section detecting means for detecting a length of a guard interval section of the orthogonal frequency division multiplexed signal;
characteristic determining means for determining a transmission line characteristic for the subcarrier that transmits the dispersed pilot signal;
first interpolating means for interpolating, in a symbol direction, data indicative of the determined transmission line characteristic; and
second interpolating means for interpolating, in a subcarrier direction, the data interpolated in the symbol direction to determine a transmission line characteristic for all subcarriers and providing the determined transmission line characteristic to equalizing means for received signal data,
**characterized in that** the second interpolating means filters t:he data indicative of the transmission line characteristic which is interpolated in the symbol direction using a filter characteristic corresponding to the detected length of the guard interval section.

2. An orthogonal frequency division multiplexed signal receiving apparatus which receives received signal data indicative of an orthogonal frequency division multiplexed signal consisting of an effective symbol section and a guard interval section and having a dispersed pilot signal inserted in a predetermined subcarrier and which recovers transmission data, said apparatus comprising:
section determining means for performing an autocorrelation operation on the input received signal data, thereby determining a length of the guard interval section;
Fourier transform means for performing a Fourier transform on the input received signal data;
characteristic determining means for determining a transmission line characteristic for a subcarrier which transmits the dispersed pilot signal on the basis of the received signal data Fourier-transformed by said Fourier transform means;
first interpolating means for interpolating, in a symbol direction, data indicative of the transmission line characteristic determined by said characteristic determining means;
second interpolating means for interpolating, in a subcarrier direction, the data indicative of the transmission line characteristic interpolated in the symbol direction by said first interpolating means to determine a transmission line characteristic for all subcarriers;
equalizing operation means for equalizing the received signal data by performing a complex arithmetic operation on received signal data Fourier-transformed by said Fourier transform means using the data indicative of the transmission line characteristic interpolated by said second interpolating means; and
demapping means for recovering the transmission data from the received signal data equalized by said equalizing operation means,
**characterized in that** said second interpolating means includes:
filter coefficient determining means for determining a filter coefficient corresponding to the length of the guard interval section determined by said section determining means; and
filtering means for performing, using the filter coefficient determined by said filter coefficient determining means, a filtering process for passing only a component, corresponding to the guard interval section beginning at a direct wave, of the transmission line characteristic interpolated in the symbol direction by said first interpolating means and supplying the result of the filtering process to said equalizing operation means.

3. The orthogonal frequency division multiplexed signal receiving apparatus according to Claim 2, **characterized in that** said filter coefficient determining means previously stores a filter coefficient corresponding to the length of the guard interval section determined by said section determining means.

4. An orthogonal frequency division multiplexed signal receiving apparatus which receives an orthogonal frequency division multiplexed signal including a dispersed pilot signal inserted in a predetermined subcarrier and recovers transmission data, said apparatus comprising:
characteristic determining means for determining a transmission line characteristic for the subcarrier that transmits the dispersed pilot signal;
first interpolating means for interpolating, in a symbol direction, data indicative of the determined transmission line characteristic in a symbol direction; and
second interpolating means for interpolating, in a subcarrier direction, the data interpolated in the symbol direction to determine a transmission line characteristic for all subcarriers and providing determined the transmission line characteristic to equalizing means for received signal data,
**characterized in that** the second interpolating means generates a delay profile from the data indicative of the transmission line characteristic interpolated in the symbol direction and filters the data indicative of the transmission line characteristic interpolated in the symbol direction using a filter characteristic determined based on the delay profile.

5. An orthogonal frequency division multiplexed signal receiving apparatus which receives received signal data indicative of an orthogonal frequency division multiplexed signal having a dispersed pilot signal inserted in a predetermined subcarrier and which recovers transmission data, said apparatus comprising:
Fourier transform means for performing a Fourier transform on the input received signal data;
characteristic determining means for determining a transmission line characteristic for a subcarrier which transmits the dispersed pilot signal on the basis of the received signal data Fourier-transformed by said Fourier transform means;
first interpolating means for interpolating, in a symbol direction, data indicative of the transmission line characteristic determined by said characteristic determining means;
second interpolating means for interpolating, in a subcarrier direction, the data indicative of the transmission line characteristic interpolated in the symbol direction by said first interpolating means to determine a transmission line characteristic for all subcarriers; and
equalizing operation means for equalizing the received signal data by performing a complex arithmetic operation on the received signal data Fourier-transformed by said Fourier transform means using the data indicative of the transmission line characteristic interpolated by said second interpolating means,
**characterized in that** said second interpolating means includes:
inverse Fourier transformmeans for performing an inverse Fourier transform on the data indicative of the transmission line characteristic interpolated in the symbol direction by said first interpolating means, thereby generating a delay profile;
multipath detecting means for detecting a direct wave component and at least one delayed wave component from the delay profile generated by said inverse Fourier transform means to determine a delay time of a delayed wave which has the longest path;
filter coefficient determining means for determining a filter coefficient corresponding to the length of the delay time determined by said multipath detecting means; and
filtering means for performing, using the filter coefficient determined by said filter coefficient determining means, a filtering process on the data indicative of the transmission line characteristic interpolated in the symbol direction by said first interpolating means and supplying the result of the filtering process to said equalizing operation means.

6. The orthogonal frequency division multiplexed signal receiving apparatus according to Claim 5, **characterized in that** said filter coefficient determining means previously stores a filter coefficient corresponding to the delay time determined by said multipath detecting means.

7. The orthogonal frequency division multiplexed signal receiving apparatus according to Claim 5 or 6, **characterized in that** saidmultipath detecting means compares each component in the delay profile generated by said inverse Fourier transform means with a previously defined threshold and detects a component having a value larger than the threshold as the direct wave component and the delay wave component.

8. An orthogonal frequency division multiplexed signal receiving method for recovering transmission data from received signal data indicative of an orthogonal frequency division multiplexed signal which consists of an effective symbol section and a guard interval section and which has a dispersed pilot signal inserted in a predetermined subcarrier, said method comprising:
a section determining step of performing an autocorrelation operation on the received signal data, thereby determining a length of the guard interval section;
a Fourier transform step of performing a Fourier transform on the received signal data;
a characteristic determining step of determining a transmission line characteristic for a subcarrier which transmits the dispersed pilot signal on the basis of the received signal data Fourier-transformed in said Fourier transform step;
a first interpolating step of interpolating, in a symbol direction, data indicative of the transmission line characteristic determined in said characteristic determining step;
a second interpolating step of interpolating, in a subcarrier direction, the data indicative of the transmission line characteristic interpolated in the symbol direction in said first interpolating step to determine a transmission line characteristic for all subcarriers;
an equalizing operation step of equalizing the received signal data by performing a complex arithmetic operation on the received signal data Fourier-transformed in said Fourier transform step using the data indicative of the transmission line characteristic interpolated in said second interpolating step; and
a demapping step of recovering the transmission data from the received signal data equalized in said equalizing operation step,
**characterized in that** said second interpolating step includes:
a filter coefficient determining step of determining a filter coefficient corresponding to the length of the guard interval section determined in said section determining step; and
a filtering step of performing, using the filter coefficient determined by said filter coefficient determining means, a filtering process for passing only a component, corresponding to the guard interval section beginning at a direct wave, of the transmission line characteristic interpolated in the symbol direction in said first interpolating step and providing the resultant data for the equalizing operation in said equalizing operation step.

9. An orthogonal frequency division multiplexed signal receiving method for recovering transmission data from received signal data indicative of an orthogonal frequency division multiplexed signal having a dispersed pilot signal inserted in a predetermined subcarrier, said method comprising:
a Fourier transform step of performing a Fourier transform on the input received signal data;
a characteristic determining step of determining a transmission line characteristic for a subcarrier which transmits the dispersed pilot signal on the basis of the received signal data Fourier-transformed in said Fourier transform step;
a first interpolating step of interpolating, in a symbol direction, data indicative of the transmission line characteristic determined in said characteristic determining step;
a second interpolating step of interpolating, in a subcarrier direction, the data indicative of the transmission line characteristic interpolated in the symbol direction in said first interpolating step to determine a transmission line characteristic for all subcarriers; and
an equalizing operation step of equalizing the received signal data by performing a complex arithmetic operation on the received signal data Fourier-transformed in said Fourier transform step using the data indicative of the transmission line characteristic interpolated in said second interpolating step,
**characterized in that** said second interpolating step includes:
an inverse Fourier transform step of performing an inverse Fourier transform on the data indicative of the transmission line characteristic interpolated in the symbol direction in said first interpolating step, thereby generating a delay profile;
a multipath detecting step of detecting a direct wave component and at least one delayed wave component from the delay profile generated in said inverse Fourier transform step to determine a delay time of a delayed wave which has the longest path;
a filter coefficient determining step of determining a filter coefficient corresponding to the length of the delay time determined in said multipath detecting step; and
a filtering step of performing, using the filter coefficient determined in said filter coefficient determining step, a filtering process on the data indicative of the transmission line characteristic interpolated in the symbol direction by said first interpolating step and providing the result of the filtering process for the complex arithmetic operation in said equalizing operation step.

10. An orthogonal frequency division multiplexed signal receiving apparatus which receives an orthogonal frequency division multiplexed signal consisting of an effective symbol section and a guard interval section and which recovers transmission data in a network environment in which an identical content is transmitted in different frequency bands,
**characterized in that** either one of an intermediate frequency signal obtained by down-converting a radio frequency signal transmitted via a first channel and an intermediate frequency signal obtained by down-converting a radio frequency signal transmitted via a second channel different from the first channel is selected, a base band signal is demodulated from the selected intermediate frequency signal, a correlation operation is performed on the base band signal to estimate the effective symbol section and the guard interval section, selection of the intermediate frequency signal is switched at a timing estimated to be included in the guard interval section, the reception level of the signal is compared with that of the signal having been selected in the effective symbol section, and the transmission data is recovered from the base band signal demodulated by selecting the intermediate frequency signal having a higher reception level.

11. An orthogonal frequency division multiplexed signal receiving apparatus which receives an orthogonal frequency division multiplexed signal consisting of an effective symbol section and a guard interval section and which recovers transmission data in a network environment in which an identical content is transmitted in different frequency bands, said apparatus comprising:
first signal converting means for down-converting a radio frequency signal transmitted via a first channel into an intermediate frequency signal;
second signal converting means for down-converting a radio frequency signal transmitted via a second channel different in frequency band from the first channel into an intermediate frequency signal;
signal selecting means for selecting either one of the intermediate frequency signal provided by down-conversion by said first signal converting means and the intermediate frequency signal provided by down-conversion by said second signal converting means;
demodulating means for demodulating a base band signal from the intermediate frequency signal selected by said signal selecting means;
recovering means for recovering the transmission data from the base band signal demodulated by said demodulating means;
section estimating means for receiving the base band signal demodulated by said demodulating means to estimate the effective symbol section and the guard interval section; and
selection controlling means that switches said signal selecting means at a timing estimated by said section estimating means to be included in the guard interval section to cause said signal selecting means to select one, which is not selected in the effective symbol section by said signal selecting means, of the intermediate frequency signal provided by down-conversion by said first signal converting means and the intermediate frequency signal provided by down-conversion by said second signal converting means, compares the reception level of the selected signal with that of the signal selected in the effective symbol section by said signal selecting means, and causes said signal selecting means to select the intermediate frequency signal having a higher reception level to enable recovery of the transmission data.

12. The orthogonal frequency division multiplexed signal receiving apparatus according to Claim 11, **characterized in that** said section estimating means has correlation operation means for performing a correlation operation on the base band signal demodulated by said demodulating means, and
said selection controlling means determines, based on a correlation value obtained by said correlation operation means performing the correlation operation, whether or not the intermediate frequency signal selected in the effective symbol section by said signal selecting means and the intermediate frequency signal selected in the guard interval section by said signal selecting means carry an identical content, and if it is determined that the signals do not carry the same content, the selection controlling means causes said signal selecting means to select only the intermediate frequency signal selected in the effective symbol section afterward.

13. The orthogonal frequency division multiplexed signal receiving apparatus according to Claim 12, **characterized in that** the apparatus further comprises phase determining means for determining a signal phase at a timing at which the correlation value obtained by said correlation operation means performing the correlation operation has a peak,
said demodulating means has oscillation signal generating means for generating a local oscillation signal for removing an offset frequency in the intermediate frequency signal selected by said signal selecting means,
said selection controlling means switches the frequency of the local oscillation signal generated by said oscillation signal generating means based on the signal phase determined by said phase determining means if it is determined, based on the correlation value obtained by said correlation operation means performing the correlation operation, that the intermediate frequency signal selected in the effective symbol section by said signal selecting means and the intermediate frequency signal selected in the guard interval section by said signal selecting means carry an identical content, and that the transmission data is to be recovered from the intermediate frequency signal selected in the guard interval section by said signal selecting means.

14. The orthogonal frequency division multiplexed signal receiving apparatus according to Claim 11, 12 or 13, **characterized in that** said selection controlling means switches the intermediate frequency signal selected by said signal selecting means once for a predetermined number of guard interval sections.

15. An orthogonal frequency division multiplexed signal receiving method for receiving an orthogonal frequency division multiplexed signal consisting of an effective symbol section and a guard interval section and recovering transmission data in a network environment in which an identical content is transmitted in different frequency bands,
**characterized in that** either one of an intermediate frequency signal obtained by down-converting a radio frequency signal transmitted via a first channel and an intermediate frequency signal obtained by down-converting a radio frequency signal transmitted via a second channel different from the first channel is selected, a base band signal is demodulated from the selected intermediate frequency signal, a correlation operation is performed on the base band signal to estimate the effective symbol section and the guard interval section, selection of the intermediate frequency signal is switched at a timing estimated to be included in the guard interval section, the reception level of the signal is compared with that of the signal having been selected in the effective symbol section, and the transmission data is recovered from the base band signal demodulated by selecting the intermediate frequency signal having a higher reception level.
